# FASCICULE DE BREVET EUROPEEN

(11) **EP 3 325 778 B1**
(45) Date de publication et mention de la délivrance du brevet: **28.08.2019**
(21) Numéro de dépôt: 16757694.1
(22) Date de dépôt: 21.07.2016
(51) Int. Cl.: F01D 9/06, F02K 3/062, F04D 29/68, B64D 27/14, F04D 29/54

(54) **AERONEF COMPRENANT UN PROPULSEUR ARRIERE CARENE AVEC STATOR D'ENTREE COMPRENANT UNE FONCTION SOUFFLAGE**
FLUGZEUG MIT ANTRIEBSSYSTEM AN DER HECKVERKLEIDUNG MIT EINLASSSTATOR MIT EINER BLASFUNKTION
AIRCRAFT COMPRISING A REAR FAIRING PROPULSION SYSTEM WITH INLET STATOR COMPRISING A BLOWING FUNCTION

(30) Priorité: 22.07.2015 FR 1556954
(43) Date de publication de la demande: 30.05.2018
(73) Titulaire: Safran Aircraft Engines, 75015 Paris (FR)
(72) Inventeur: ROMANO, Pascal, 77550 Moissy-Cramayel Cedex (FR); GRUBER, Mathieu, Simon, Paul, 77550 Moissy-Cramayel Cedex (FR)
(74) Mandataire: Gevers & Orès
(86) Numéro de dépôt international: PCT/FR2016/051883
(87) Numéro de publication internationale: WO 2017/013361

(56) Documents cités:
- FR-A- 1 339 141
- FR-A- 1 472 962
- FR-A1- 2 613 688
- FR-A1- 2 997 681

## Description

### Domaine de l'invention et état de la technique :

La présente invention se rapporte à un aéronef, tel qu'un avion, notamment civil, propulsé par une ou plusieurs soufflantes placées en aval du fuselage, et plus particulièrement le cas où les soufflantes sont carénées par une nacelle. L'invention concerne des moyens pour distribuer le flux d'air entrant dans ladite nacelle.

Le type de turbomachine avec une soufflante à l'arrière du fuselage se retrouve, par exemple, dans une architecture d'aéronef proposée dans les demandes de brevet FR-A1-2 997 681, FR-A-1 339 141 et FR-A1-2 613 688. Dans ce cas, la turbomachine est intégrée dans le prolongement du fuselage en aval de celui-ci, en vue de réduire les nuisances sonores et la consommation de carburant de l'aéronef en limitant la traînée aérodynamique par absorption de la couche limite.

Dans une telle architecture, un aéronef est propulsé par une turbomachine à soufflantes contrarotatives carénées, la turbomachine étant intégrée à l'arrière du fuselage de l'aéronef. Généralement, la turbomachine comprend au moins deux générateurs de gaz qui alimentent une turbine de puissance ayant deux rotors contrarotatifs pour entraîner deux soufflantes disposées en aval des générateurs de gaz. Les générateurs de gaz ont des entrées d'air latérales distinctes pour alimenter chacun d'eux.

En aval des générateurs de gaz, les soufflantes sont disposées dans le prolongement du fuselage de l'aéronef et généralement alimentées par une couronne annulaire reliée à ce dernier, de manière à absorber une partie au moins de la couche limite formée autour du fuselage. Le diamètre des soufflantes est de l'ordre de celui du fuselage dans sa plus grande section. La vitesse de rotation des soufflantes est généralement plus basse que pour des turbomachines classiques, notamment pour que la vitesse en tête d'aube soit subsonique.

Les deux soufflantes constituent un ensemble propulseur à faible taux de compression et fort débit. Dans ce cas, le fonctionnement et l'opérabilité dudit ensemble propulseur sont particulièrement sensibles aux conditions d'entrée du flux d'air dans la nacelle, notamment son orientation et son homogénéité.

La présente invention a pour objet de fournir une solution pour adapter au moins une partie des paramètres de l'écoulement entrant dans la nacelle aux conditions de fonctionnement de l'ensemble propulsif.

### Exposé de l'invention :

A cet effet, l'invention concerne un aéronef comprenant un fuselage et un ensemble propulseur, ledit ensemble propulseur comprenant une turbine de puissance, au moins deux générateurs de gaz distincts agencés chacun dans une veine d'écoulement primaire, au moins un rotor de soufflante placé à l'arrière du fuselage, dans le prolongement de celui-ci suivant un axe longitudinal, le rotor de soufflante étant entrainé par la turbine de puissance et une nacelle formant un carénage dudit au moins un rotor de soufflante dans lequel passe un flux d'air, chaque veine d'écoulement primaire convergeant vers une veine centrale qui alimente la turbine de puissance, et l'aéronef comportant une pluralité de bras radiaux de stator montés en amont dudit au moins un rotor de soufflante et s'étendant entre le fuselage et la nacelle, lesdits bras radiaux comportant des moyens de soufflage configurés pour souffler, dans l'environnement d'un bord de fuite desdits bras radiaux, un flux d'air additionnel s'additionnant audit flux d'air dans le prolongement du bord de fuite.

Le soufflage d'air dans le prolongement du bord de fuite permet de limiter le ralentissement local de l'écoulement lié au bras, appelé « sillage », en le ré-énergisant. En particulier, ce sillage est une source de bruit importante lorsque les aubes du rotor de soufflante le rencontre en aval. En le diminuant, on atténue donc le bruit généré par l'ensemble propulseur de l'aéronef.

Avantageusement, les moyens de soufflage sont agencés pour répartir le débit du flux additionnel d'air de manière différenciée le long de l'envergure d'un bras radial, de préférence en assurant un débit plus élevé dans une partie proche de l'extrémité radiale extérieure que dans une partie proche de l'extrémité radiale intérieure.

Cela permet d'adapter le soufflage aux conditions locales d'écoulement pour minimiser le sillage, notamment en tenant compte du fait que la vitesse de l'écoulement est plus forte loin du fuselage. Pour cela, l'aéronef comporte des moyens de réglage différenciés du débit dudit flux additionnel sur au moins deux portions radiales des bras radiaux.

Avantageusement, les moyens de soufflage sont agencés pour faire varier le débit de flux d'air additionnel dans le temps, en fonction des conditions de fonctionnement de l'ensemble propulseur. Cela permet, par exemple, de minimiser les pertes dans les moteurs à bas régime lorsque le flux d'air additionnel est capté à partir de l'étage compresseur de générateurs de gaz.

Selon un mode de réalisation préféré, chaque bras radial comportant deux faces latérales s'étendant radialement de part et d'autre d'un profil moyen, les moyens de soufflage comportent des orifices agencés sur lesdites faces latérales pour souffler le flux d'air additionnel en amont du bord de fuite.

Deux grilles placées en sortie desdits orifices, l'une coulissant par rapport à l'autre, peuvent former des moyens de réglage du flux d'air additionnel.

De préférence, chacun desdits orifices a une extension le long de l'axe longitudinal comprise entre 5% et 10% de la longueur de corde du bras radial au niveau de la distance radiale à laquelle se situe ledit orifice.

Cela permet d'injecter un débit d'air additionnel avec un débit adapté pour combler le déficit de vitesses dans le sillage en minimisant les perturbations dues au soufflage.

Dans un mode de réalisation alternatif, les moyens de soufflage comportent des dispositifs de soufflage du flux d'air additionnel à partir du bord de fuite.

De préférence, la pluralité de bras radiaux comporte au moins plusieurs bras de maintien, configurés pour maintenir la nacelle.

L'utilisation de plusieurs bras de maintien en amont permet d'augmenter l'homogénéité et la symétrie de la reprise des efforts supportés par la nacelle. La rigidité de cette dernière peut alors être réduite, ce qui contribue à réduire la masse de l'ensemble.

Avantageusement, la distance séparant le bord de fuite desdits bras radiaux et le rotor de soufflante se trouvant immédiatement en aval suivant ledit écoulement, prise à une distance radiale correspondant sensiblement à 70% de l'envergure d'une aube dudit rotor de soufflante, est au moins sensiblement égale à trois vingtièmes du diamètre extérieur dudit rotor de soufflante.

Notamment dans le cas des bras de maintien de la nacelle, cela permet à l'écoulement de s'homogénéiser et au mélange entre l'air additionnel soufflé et l'écoulement principal de se mélanger pour minimiser les effets de sillage.

Avantageusement, la pluralité de bras radiaux comporte au moins plusieurs bras comprenant une partie mobile à calage variable configurée pour dévier axialement ledit flux d'air.

La déviation du flux d'air entrant dans le rotor de soufflante permet de corriger des inhomogénéités circonférentielles ou des distorsions de ce flux d'air, créées notamment au cours de son trajet le long du fuselage de l'aéronef.

Avantageusement, les orifices de soufflage sont situés en amont desdites parties mobiles.

Avantageusement, le flux d'air additionnel est pulsé ou soufflé en continu. La veine centrale est disposée en amont de la turbine de puissance.

Avantageusement, la veine centrale est disposée en amont de la soufflante.

Avantageusement, la turbine de puissance est installée à l'arrière du fuselage, dans le prolongement de celui-ci.

L'ensemble propulseur est agencé à l'arrière du fuselage. Les moyens de soufflage sont agencés en amont du rotor de soufflante.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 présente une vue schématique en coupe longitudinale de la partie arrière d'un aéronef selon l'invention avec son ensemble propulsif ;
- la figure 2 présente une vue schématique de côté de la partie arrière d'un aéronef selon l'invention avec son ensemble propulsif ;
- la figure 3 présente une vue schématique de la partie arrière d'un aéronef selon l'invention avec son ensemble propulsif, suivant une coupe longitudinale par un plan passant par un bras de maintien équipé d'un volet mobile ;
- la figure 4 présente une vue schématique de la partie arrière d'un aéronef selon l'invention avec son ensemble propulsif, suivant une coupe longitudinale par un plan passant par une aube radiale mobile ;
- la figure 5 présente une vue schématique du dispositif de réglage du calage d'un volet mobile de bras ou d'une aube radiale de stator applicable dans l'invention ;
- la figure 6 présente une vue schématique de la partie arrière d'un aéronef selon l'invention avec son ensemble propulsif, suivant une coupe longitudinale par un plan passant par un bras de maintien équipé d'un dispositif de soufflage ;
- La figure 7a présente schématiquement en perspective une portion du bord de fuite d'un bras de maintien de nacelle selon l'invention équipé d'une première variante de moyens de soufflage ;
- La figure 7b présente schématiquement en perspective avec une coupe, une portion du bord de fuite d'un bras de maintien de nacelle selon l'invention équipé d'une deuxième variante de moyens de soufflage ;
- La figure 8a présente schématiquement une coupe près du bord de fuite d'un bras de maintien de nacelle selon l'invention équipé d'une troisième variante de moyens de soufflage, mis dans une première position ;
- La figure 8b présente schématiquement une coupe près du bord de fuite d'un bras de maintien de nacelle selon l'invention équipé d'une troisième variante de moyens de soufflage, mis dans une deuxième position ; et
- Les figure 9a et 9b présentent schématiquement une coupe près du bord de fuite d'un bras de maintien de nacelle selon l'invention équipé d'une troisième variante de moyens de soufflage, correspondant aux figures 8a ou 8b, associée à un volet mobile avec et sans incidence.

### Description d'un mode de réalisation :

### L'AERONEF ET LA TURBOMACHINE

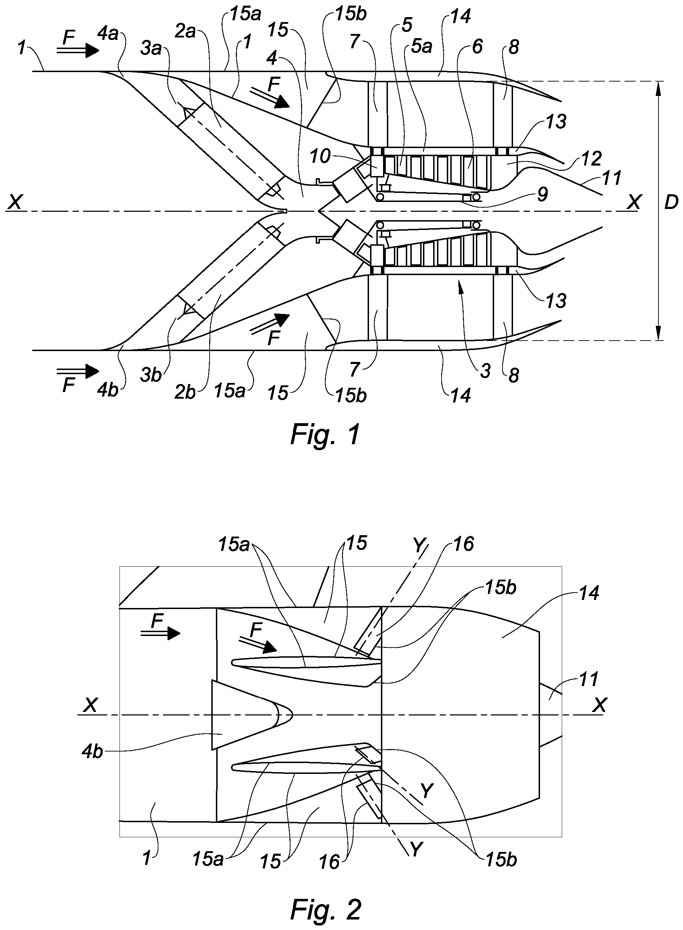

L'invention s'applique en particulier à un aéronef tel qu'un avion comportant une turbomachine du type de celle représentée sur la figure 1 ou la figure 2.

Comme représenté sur la figure 1, la turbomachine est centrée sur l'axe longitudinal XX du fuselage 1 de l'aéronef. Cette turbomachine comprend, d'amont en aval, dans le sens d'écoulement des gaz, deux générateurs de gaz distincts 2a, 2b alimentant simultanément une unique turbine de puissance 3. La turbomachine est installée à l'extrémité avale du fuselage 1 de l'aéronef.

Dans ce document, les dénominations axiales et radiales se réfèrent à l'axe XX du fuselage et de la turbomachine. De même, les termes amont et aval se réfèrent à la direction de l'écoulement principal le long de cet axe.

De façon connue en soi, chaque générateur de gaz 2a, 2b comprend au moins un compresseur, une chambre de combustion et au moins une turbine haute pression (non représentés sur les figures).

Chaque générateur de gaz 2a, 2b est logé à l'intérieur d'une veine d'écoulement primaire 3a, 3b. Des entrées d'air distinctes 4a, 4b sont prévues pour ces veines 3a, 3b afin d'alimenter chaque générateur de gaz 2a, 2b.

Dans la configuration représentée sur la figure 1, ces entrées d'air 4a, 4b sont reliées au fuselage 1 de l'aéronef, en amont des générateurs de gaz 2a, 2b, de façon à absorber une partie au moins de la couche limite formée autour du fuselage 1 de l'aéronef. Plus précisément, leur paroi interne est directement intégrée au fuselage 1 de l'aéronef.

Dans d'autres configurations, non représentées ici, les entrées d'air 4a, 4b peuvent être écartées du fuselage pour alimenter les compresseurs des générateurs de gaz 2a, 2b avec un écoulement moins perturbé par la couche limite sur le fuselage 1. Il est également envisageable d'utiliser plus de deux générateurs de gaz, par exemple trois pour alimenter la turbine de puissance 3.

En tout état de cause, les entrées d'air 4a, 4b sont conçues pour limiter les perturbations qu'elles peuvent créer en aval sur l'écoulement F longeant le fuselage 1 et entrant dans un ensemble propulseur qui est décrit dans la suite. De plus, elles se situent ici au début de la partie du fuselage 1 qui va en se rétrécissant vers ledit ensemble propulseur, de manière à les éloigner de ce dernier.

De préférence, les deux veines d'écoulement primaires 3a, 3b des générateurs de gaz 2a, 2b convergent sur l'axe longitudinal XX et forment entre elles un V ouvert vers l'amont, dont l'angle d'ouverture est de préférence compris entre 80° et 120°.

Les deux veines d'écoulement primaires 3a, 3b des générateurs de gaz 2a, 2b convergent dans une veine primaire centrale 4 qui alimente la turbine de puissance 3. Un mélangeur (non représenté sur les figures) est de préférence positionné au niveau de la zone de convergence des deux veines 3a, 3b, logeant les générateurs de gaz 2a, 2b. Ce mélangeur a pour fonction de mélanger les flux gazeux issus des deux générateurs de gaz 2a, 2b pour créer un flux gazeux unique homogène en sortie de la veine centrale primaire 4.

La turbine de puissance 3, qui est alimentée par ce flux primaire en sortie de la veine centrale 4, est placée dans le prolongement du fuselage 1. Cette turbine de puissance 3 entraîne au moins un rotor de soufflante. Ici, la turbine de puissance est munie de deux rotors 5, 6 de turbine contrarotatifs pour entraîner de façon contrarotative deux rotors de soufflantes 7, 8. Ces rotors de turbine 5, 6 sont coaxiaux et centrés sur l'axe longitudinal XX. Ils tournent autour d'un carter intérieur 9 fixé à la structure de l'aéronef.

Ici, un premier rotor 5 de turbine correspond à des aubes liées à un corps tubulaire 5a séparant la veine d'écoulement primaire, dans la turbine de puissance 3, de la veine d'écoulement secondaire, dans laquelle se trouvent les rotors de soufflante 7,8. Les aubes et le corps tubulaire 5a du premier rotor 5 sont reliées aux paliers de support du rotor 5 sur le carter intérieur 9 par des bras support 10 qui traversent la veine primaire en amont de la turbine de puissance 3.

Sur le même exemple, le deuxième rotor 6 correspond à des aubes liées à une paroi radialement intérieure de la veine primaire dans la turbine 3 et intercalées longitudinalement entre les aubes du premier rotor 5.

En aval de la turbine de puissance 3, la partie radialement interne du deuxième rotor 6 se prolonge par un corps central 11. D'autre part, elle est reliée, par des bras support 12, à un anneau 13 de support des aubes du rotor de soufflante aval 8. De plus, cet anneau 13 prolonge le corps tubulaire 5a du premier rotor 5 et comporte une extension vers l'arrière, de façon à former, avec le corps central 11, une tuyère d'éjection primaire, en sortie de la turbine de puissance 3.

Sur l'exemple présenté, l'ensemble propulseur est formé de deux rotors de soufflantes 7, 8 carénés par une nacelle 14 fixée à la structure de l'aéronef. Les rotors de soufflantes présentent un diamètre externe D qui est proche du diamètre externe le plus élevé du fuselage 1 de l'aéronef.

Ici, un premier rotor de soufflante 7, amont, est positionné au niveau de l'entrée de la turbine de puissance 3. Il est relié au premier rotor 5 de turbine 3 au niveau des bras 10 qui soutiennent en amont le corps extérieur cylindrique 5a. Ce rotor de soufflante amont 7 tourne donc à la même vitesse que le premier rotor 5 de la turbine de puissance 3.

Sur ce même exemple, le deuxième rotor de soufflante 8, aval, est positionné au niveau de la sortie de la turbine de puissance 3. Il est relié au deuxième rotor 6 de turbine 3 au niveau de l'anneau de support 13 et des bras 12 qui le soutiennent. Ce rotor de soufflante aval 8 tourne donc à la même vitesse que le deuxième rotor 6 de la turbine de puissance 3.

L'air entrant dans les soufflantes 7, 8 étant en partie composé de la couche limite du fuselage de l'aéronef, la vitesse en entrée est peu élevée par rapport à des soufflantes classiques de turbomachine et la vitesse en sortie est également plus basse à taux de compression identique, ce qui améliore les performances propulsives et acoustiques de ces soufflantes. Par ailleurs, l'important diamètre externe D des soufflantes 7, 8 entraîne que leur vitesse de rotation, comme celle des rotors 5, 6 de la turbine de puissance 3, restera également peu élevée par rapport à une turbomachine classique.

Par ailleurs, dans une variante de réalisation, non décrite, la turbine de puissance 3 peut être composée de manière connue d'un seul rotor et d'un stator, le propulseur n'ayant qu'une seule soufflante associée à ce rotor.

### MAINTIEN DE LA NACELLE

En référence à la figure 2, la nacelle 14 est maintenue par plusieurs bras de maintien 15 répartis circonférentiellement, typiquement entre trois et six bras, la reliant en amont du premier rotor de soufflante 7 à une structure fixe de l'aéronef 1. Le bras de maintien prolonge la nacelle 14 des soufflantes jusqu'au fuselage. La multiplication du nombre de bras de maintien 15 permet d'augmenter l'homogénéité et la symétrie de la reprise des efforts supportés par la nacelle 14. La rigidité de cette dernière peut alors être réduite, ce qui contribue à réduire la masse de l'ensemble.

Par contre, on cherche à réduire les perturbations des bras de maintien 15 sur l'écoulement F entrant dans la nacelle 14, ainsi que leur traînée. Ces bras de maintien 15 comportent donc un capotage profilé formant une aube radiale qui s'étend du fuselage 1 de l'aéronef à la nacelle 14. Sur l'exemple présenté en figure 2 cette aube a une forme sensiblement trapézoïdale entre une base inférieure allongée, à son intersection avec le fuselage 1, et une base extérieure courte, à son intersection avec la nacelle 14. Elle présente en amont, suivant le sens de l'écoulement F entrant dans la nacelle 14, un bord d'attaque 15a qui relie le fuselage 1 et la nacelle 14 suivant une direction sensiblement parallèle à l'axe XX. En aval, son bord de fuite 15b, sensiblement transverse à l'écoulement F entrant dans la nacelle 14, suit une direction qui forme un angle proche de l'angle droit avec le fuselage 1.

### BRAS AVEC VOLET MOBILE

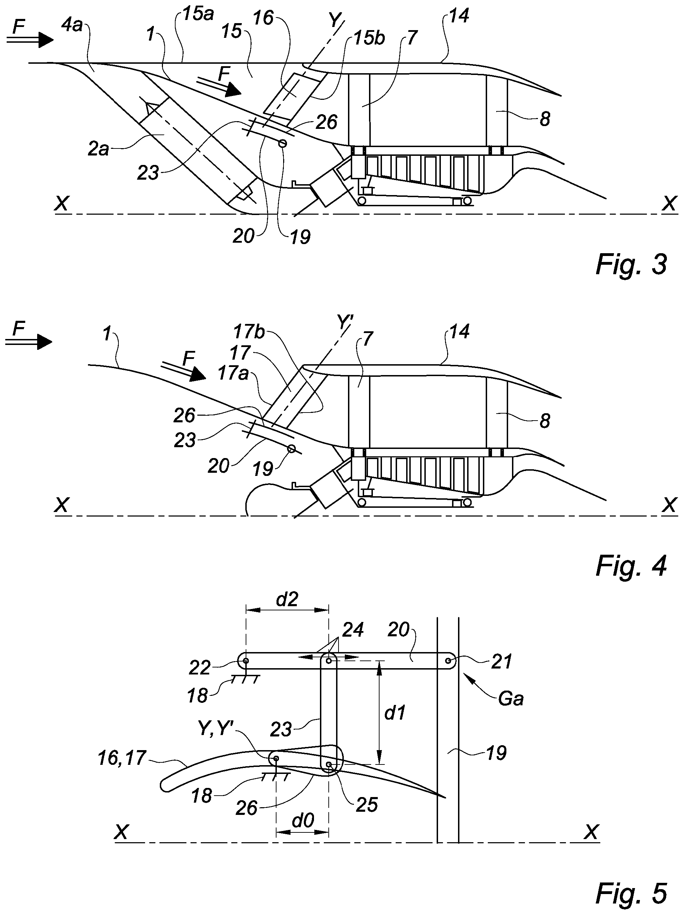

En référence aux figures 2 et 3, selon un aspect de l'invention, les bras de maintien 15 de la nacelle 14 peuvent être munis de volets 16 au niveau de leur bord de fuite 15b. Chacun desdits volets est mobile en rotation autour d'un axe Y sensiblement radial et parallèle au bord de fuite 15b et s'étend sensiblement sur l'envergure du bras de maintien 15. Les volets sont disposés à l'entrée de la nacelle comme cela est visible sur la figue 3.

L'écoulement F alimentant les rotors de soufflantes 7, 8 est dévié en amont, en longeant le fuselage 1, par les variations de forme du fuselage ainsi que par des éléments non représentés, par exemple les ailes, se raccordant audit fuselage. Le fait de rendre mobile un volet 16 de bord de fuite permet d'orienter cet écoulement F avant le rotor de soufflante 7 et de minimiser l'incidence perçue par le rotor de soufflante et la distorsion afférente. Compte tenu du fait que les deux rotors de soufflantes 7, 8 constituent un ensemble propulseur à faible taux de compression et fort débit, la minimisation des distorsions du flux d'air entrant dans la nacelle 14 peut améliorer de manière importante le fonctionnement et l'opérabilité dudit ensemble propulseur.

Comme représenté sur la figure 3, ces volets mobiles 16 s'étendent sur la majeure partir de l'envergure du bras de maintien 15, de manière à orienter la totalité de l'écoulement entrant dans la nacelle 14. Sur la figure 3, le volet mobile 16 a une corde sensiblement constante en fonction de l'envergure mais cela n'est pas limitatif. La corde du volet mobile peut par exemple croître en allant du fuselage 1 vers la nacelle 14, s'il est intéressant de modifier plus fortement l'écoulement F vers l'extrémité radiale des aubes du rotor de soufflante amont 7.

Le réglage de l'angle de calage des volets mobiles 16 peut être effectué de manière collective, avec la même valeur pour tous les bras de maintien 15, ou individualisée, en adaptant la valeur en fonction de la position azimutale de chaque bras de maintien 15. Cette seconde option permet de traiter des conditions d'alimentation de l'ensemble propulseur par un écoulement F non symétrique, par exemple dans le cas d'un vent de travers.

Le réglage de l'angle de calage des volets mobiles 16 peut également varier temporellement et être asservi aux variations des conditions d'alimentation de l'ensemble propulseur. Dans le cas du vent de travers, par exemple, cela permet de tenir compte de sa variation d'intensité ou de direction.

### AUBE RADIALE MOBILE

Dans une variante de réalisation, illustrée sur la figure 4, des aubes de stator radiales à calage variable 17, reliant le fuselage 1 à la nacelle 14, peuvent être disposées en azimut entre les bras de maintien 15, de préférence au même niveau axialement que les volets mobiles 16 de ces bras. Ces aubes sont mobiles en rotation, chacune autour d'un axe Y' ayant une inclinaison par rapport à l'axe XX sensiblement égale à celle des axes de rotation Y des volets mobiles 16 des bras de maintien 15. Les aubes sont disposées à l'entrée de la nacelle 14.

Ici, les aubes radiales de stator 17 n'ont pas de fonction structurale pour maintenir la nacelle 14. Dans cet exemple, chaque aube radiale de stator 17 possède une forme allongée, de préférence tridimensionnelle, s'étendant selon une direction radiale. Chaque aube radiale de stator 17 possède, de préférence, une corde sensiblement constante sur sa longueur et sensiblement égale à celle des volets mobiles 16 sur les bras de maintien 15. De préférence, chaque aube radiale de stator 17 forme un corps aérodynamique ayant un bord d'attaque 17a et un bord de fuite 17b de manière à dévier tout flux d'air incident F reçu par l'aube radiale de stator 17.

Ici, Le calage d'aubes radiales 17 est réglable et, éventuellement, asservi, de manière individuelle ou collective, selon les mêmes modalités que celles décrites pour les volets mobiles 16 des bras de maintien 15. L'ensemble des aubes radiales 17 et des volets mobiles 16 forme ainsi une couronne de bras radiaux de stator à calage variable en entrée de la nacelle 14.

Dans l'exemple présenté, avec les rotors de soufflantes contrarotatives 7, 8, l'augmentation du nombre de profils à calage variables permet de corriger plus finement les inhomogénéités de l'écoulement F entrant dans la nacelle 14, le nombre des bras de maintien 15 étant limité. Les valeurs des angles de calage des volets mobiles 16 et des aubes radiales 17 évoluent, de préférence, dans une plage de valeurs faibles, typiquement inférieure à 15° en valeur absolue.

### CAS D'UNE SEULE SOUFFLANTE

Dans le cas, non représenté où l'ensemble propulseur comprendrait un seul rotor de soufflante dans la nacelle 14, l'ensemble de bras radiaux à calage variable, formé par les volets mobiles 16 et les aubes radiales à calage variable 17, peut faire office de roue directrice d'entrée. En effet, la pluralité des volets mobiles 16 et des aubes de stator à calage variable 17 montés en amont du rotor de soufflante permettent de dévier le flux d'air F incident de manière à ce que le flux d'air F dévié comporte une composante axiale et tangentielle. Ensuite, le flux d'air F dévié est redressé axialement par les aubes du rotor de soufflante et comprimé de manière à ce que le flux d'air sortant de la nacelle 14 ne comporte, avantageusement, qu'une composante majoritaire axiale.

De préférence, un tel ensemble redresseur comporte un nombre de profils à calage variable, aubes radiales 17 et volets mobiles 16, au moins égal à vingt. De plus pour obtenir un effet redresseur, le calage des aubes radiales 17 et des volets mobiles 16 dépend du rotor de soufflante mais doit être au minimum de 15°, tout en restant normalement inférieur à 65°.

De même, si l'on considère un critère aérodynamique, appelé « spacing » et qui est défini par le rapport de la longueur de corde des volets mobiles 16 ou aubes radiales 17 sur la distance entre deux volets mobiles 16 ou aubes radiales 17 adjacents en tête, la valeur du « spacing » est supérieure à 0,8, pour obtenir un effet redresseur. En comparaison, pour les bras de maintien 15, on recherchera une valeur du « spacing » inférieure à 0,5, pour minimiser leurs perturbations de l'écoulement incident F.

### COMPLEMENT SUR LES SYSTEMES DE REGLAGE DU CALAGE

Plusieurs dispositifs peuvent être installés pour réaliser un calage adaptatif et individuel des volets mobiles 16 et/ou des aubes radiales 17 autour de leurs axes de rotation Y, Y' respectifs. Un exemple de réalisation de moyens de réglage individuel du calage des volets mobiles 16 et/ou des aubes radiales 17 est donné ici à titre illustratif et non limitatif.

Dans cet exemple, en référence aux figures 3 et 4, les moyens de réglage individuel du calage variable sont préférentiellement localisés sur une structure fixe, non représentée, à l'intérieur du fuselage 1.

Dans cet exemple, en référence à la figure 5, chaque volet mobile 16 et/ou aube radiale 17 est monté en rotation autour de son axe de rotation, également dit axe de calage Y, Y', ledit axe de calage Y, Y' étant fixé sur un moyen de pivot solidaire d'une structure fixe 18 de l'aéronef. Par ailleurs un anneau de commande 19 est monté mobile en rotation autour de l'axe longitudinal X-X par rapport à la structure fixe 18 de l'aéronef.

Une première bielle 20 est montée, au niveau d'une des ses extrémités, en rotation autour d'un premier axe de pivot 21 sensiblement radial et solidaire de l'anneau de commande 19, et, au niveau de son autre extrémité, en rotation autour d'un deuxième axe de pivot 22 sensiblement radial et monté sur la structure fixe18 de l'aéronef.

Le premier axe de pivot 21 peut être, par exemple, un pion s'insérant dans une fente longitudinale à l'extrémité de la bielle 20. De cette manière, lorsque l'anneau de commande 19 tourne, le déplacement du pion peut entraîner la bielle 20 en rotation autour du deuxième axe de pivot 22.

Le deuxième axe de pivot 22 de la première bielle 20 est décalé en azimut par rapport à l'axe de calage Y, Y' du volet mobile 16 ou de l'aube radiale 17 et, ici, en amont de cet calage Y, Y'.

Ici, la première bielle 20 est sensiblement alignée avec l'axe longitudinal X-X, donc sensiblement perpendiculaire à l'anneau de commande 19 pour une position Ga de ce dernier correspondant à un calage moyen du volet mobile 16 ou de l'aube radiale 17.

Une deuxième bielle 23 est montée pivotante sur la première bielle 20 autour d'un axe d'articulation 24 entre les deux bielles, proche d'une de ses extrémités. Des moyens supportant ledit axe d'articulation 24 peuvent être configurés de manière à ce que l'on puisse déplacer l'axe d'articulation 24 sur la première bielle 20.

La deuxième bielle 23 est articulée, à proximité de son autre extrémité, de manière pivotante autour d'un troisième axe de pivot 25 monté sur le volet mobile 16 ou l'aube radiale 17. Le troisième axe de pivot 25 est placé à une distance d0 non nulle de l'axe de calage Y, Y' du volet mobile 16 ou de l'aube radiale 17, de manière à assurer un bras de levier permettant de transformer le déplacement de la deuxième bielle 23 en un mouvement de rotation du volet mobile 16 ou de l'aube radiale 17, donc en une modification de son angle de calage. Ce décalage peut être assuré par une bielle 26 fixe par rapport au volet mobile 16 ou à l'aube radiale 17, ou par tout autre moyen. Ici, le troisième axe de pivot 25 se trouve sensiblement sur la corde du volet mobile 16 ou de l'aube radiale 17, sans que cet exemple soit limitatif. Sur l'exemple présenté, le troisième axe de pivot 25 se trouve en aval de l'axe de calage Y, Y' du volet mobile 16 ou de l'aube radiale 17.

Par ailleurs, la deuxième bielle 23 est ici montée de telle sorte qu'elle soit sensiblement perpendiculaire à la première bielle 25 pour une position de l'anneau de commande 24 correspondant à un calage moyen du volet mobile 16 et/ou de l'aube radiale 17.

Avec un tel montage, on dispose pour faire varier l'angle de calage de chaque volet mobile 16 ou aube radiale 17, d'une variable de commande Ga, correspondant à la position de l'anneau de commande 19 lorsqu'il tourne autour de l'axe XX, et de deux paramètres ajustables pour modifier l'influence de la variable de commande Ga en fonction de la position azimutale du volet mobile 16 et/ou de l'aube radiale 17.

Un premier paramètre correspond à la distance d1, sur la deuxième bielle 23, entre le troisième axe de pivot 25 et l'axe d'articulation 24 avec la première bielle 20. Cette distance d1 a une influence immédiate, comme on peut s'en persuader en regardant la figure 5, sur l'angle de calage du volet mobile 16 et/ou de l'aube radiale 17pour une position Ga donnée de l'anneau de commande 19. Cette distance d1 peut être modifiée, par exemple, en changeant de deuxième bielle 23.

Le deuxième paramètre concerne la distance d2, sur la première bielle 20, entre le deuxième axe de pivot 22 et l'axe d'articulation 24 avec la deuxième bielle 23. Ce deuxième paramètre d2 est plus particulièrement lié à un facteur multiplicatif de l'amplitude des variations de l'angle de calage du volet mobile 16 ou de l'aube radiale 17 par rapport aux variations de position Ga de l'anneau de commande 19. La diminution de la distance d2 induit une diminution des amplitudes de l'angle de calage pour un même déplacement Ga de l'anneau de commande 19, et inversement.

Un tel dispositif peut être utilisé pour corriger les inhomogénéités de la couche limite ingérée par les rotors de soufflantes 7, 8. On constate un niveau moindre de distorsion due à l'ingestion de couche limite à faible vitesse (atterrissage ou décollage) et, par contre, une forte distorsion en vol de croisière. On peut alors régler le calage des volets mobiles 16 et/ou des aubes radiales 17:
- en associant une première valeur de la position Ga de commande au vol à faible vitesse, pour laquelle aucune variation azimutale de calage des aubes n'est nécessaire, et
- en associant une deuxième valeur de la position Ga de commande au vol de croisière, pour laquelle une variation azimutale de calage des aubes est effectuée pour corriger la distorsion.

### BRAS STRUCTURAUX AVEC SOUFFLAGE

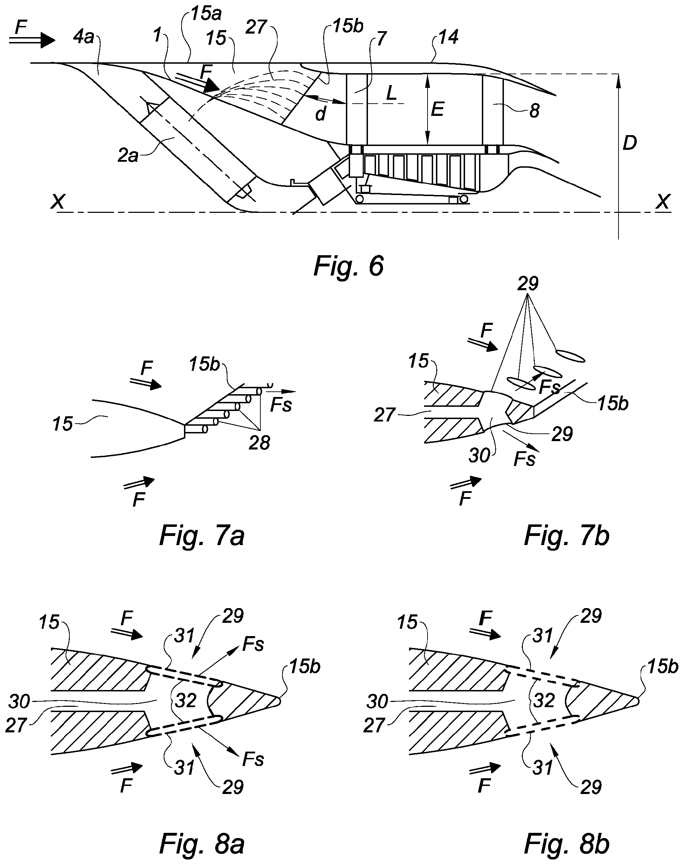

Selon l'invention, en référence à la figure 6, les bras de maintien 15 sont munis de dispositifs permettant d'effectuer un soufflage d'air additionnel Fs au niveau de leur bord de fuite 15b. Avantageusement, cet air est ici prélevé au niveau des compresseurs du ou des générateurs de gaz 2a et acheminé vers les dispositifs de soufflage par des conduits 27 passant à l'intérieur du bras de maintien 15.

Le soufflage d'air additionnel Fs permet de combler, idéalement de manière totale, le déficit de vitesse dû à la couche limite qui se forme le long du capotage du bras, dans l'écoulement F entrant dans la nacelle 14. Il supprime ou atténue fortement le sillage qui se forme derrière le bras de maintien 15.

Or l'interaction de ce sillage avec les aubes des rotors de soufflantes 7, 8 qui défilent derrière en rotation est une source importante de bruit. Typiquement, le bruit créé par ces interactions peut se décomposer en une composante tonale et une composante large bande.

La composante tonale correspond à l'interaction entre le sillage moyen et, principalement, le premier rotor de soufflante 7. Cette composante se manifeste aux fréquences propres du rotor de soufflante amont 7. On constate une augmentation significative des niveaux de bruit à la fréquence fondamentale de défilement des aubes du rotor 7 et à ses harmoniques.

La composante large bande correspond principalement à l'interaction entre les structures turbulentes contenues dans le sillage du bras de maintien 15 et le bord d'attaque des aubes du rotor de soufflante 7.

Les normes aéronautiques cherchent en particulier à réduire la valeur de ce bruit en champ lointain pour limiter les nuisances sonores et émettent des contraintes sur sa valeur en en mesurant un impact pour l'environnement. L'évaluation du bruit perçu correspond à une pondération de l'intensité en fonction des fréquences et est mesurée suivant une unité nommée EPNdB (pour l'anglo-saxon Effective perceived Noise decibels). A titre indicatif, il a été expérimenté qu'un bras fixe placé devant un doublet d'hélices contrarotatives non carénées peut entraîner une pénalité d'environ 6 EPNdb sur le bruit émis par un aéronef. En contrepartie, il a été estimé que cet impact sonore peut être en partie réduit à 3 EPNdb avec un soufflage d'air au bord de fuite du bras.

Dans un premier mode de réalisation des dispositifs de soufflage, en référence à la figure 7a, le bord de fuite 15b du bras de maintien 15 est tronqué et laisse le passage à des buses 28 de soufflage d'air additionnel Fs, réparties sur l'envergure du bras de maintien 15. Ces buses sont alimentées par les conduits 27 précédemment décrits. L'espacement des buses 28, leur diamètre et leur forme sont agencés, en rapport avec le débit d'air amené par les conduits 27 pour créer des jets qui entraînent l'écoulement de manière à compenser le déficit de vitesse derrière le bord de fuite 15b et, ainsi, à minimiser le sillage du bras. Avantageusement, lesdites buses 28 sont rétractables lorsqu'il n'y pas de soufflage.

Dans un deuxième mode de réalisation, en référence à la figure 7b, des orifices d'éjection 29 pour le soufflage d'air additionnel Fs sont répartis, ici sur chaque face du profil du bras de maintien 15, en amont du bord de fuite 15b. Ces orifices d'éjection 29 peuvent avoir la forme de trous ovoïdes ou de fentes allongées de manière sensiblement parallèle au bord de fuite 15b. Les conduits 27 d'alimentation en air débouchent dans une cavité interne 30 qui communique avec les orifices d'éjection 29. Dans ce dispositif, le soufflage d'air additionnel Fs sortant par les orifices d'éjection 29 est rapidement rabattu le long de la paroi du bras de maintien 15 et le débit d'air injecté permet de compenser le déficit de vitesse derrière le bord de fuite 15b. Les formes de la cavité interne 30 et des orifices d'éjection 29 sont agencées pour optimiser ce phénomène.

Dans cette conception, l'extension des orifices de soufflage 29 le long de la corde du profil du bras de maintien 15 est de préférence de l'ordre de grandeur de l'épaisseur de la couche limite qui se développe dans l'écoulement F autour de ce profil. Typiquement, pour une longueur de corde de 1m sur le bras de maintien 15 de la nacelle 14 et une couche limite turbulente, l'extension des orifices de soufflage 29 le long de la corde est d'environ 5 à 10 cm. L'extension le long de l'axe longitudinal XX des orifices de soufflage 29 se situant à une distance radiale donnée dudit axe XX est donc, de préférence, comprise entre 5% et 10% de la longueur de corde du bras de maintien 15 au niveau de ladite distance radiale.

Par ailleurs, le bord de fuite 15b des bras de maintien 15 se trouve préférentiellement à une distance suffisante du rotor de soufflante amont 7 pour que le jet du soufflage se mélange à l'écoulement principal F contournant le bras de maintien 15 et atténue l'effet de sillage. Ici, cet éloignement est mesuré par une distance d prise entre le bord de fuite 15b et le rotor de soufflante amont 7 en suivant une ligne de courant L passant à un certain pourcentage de l'envergure des aubes du rotor de soufflante amont 7. Typiquement cette distance d est de l'ordre de 15% du diamètre D du rotor de soufflante amont 7 à 70% de l'envergure E des aubes de ce dernier.

De manière avantageuse, l'ensemble comporte également des moyens qui permettent de faire varier le débit soufflé selon la position en envergure E et/ou de le réguler dans le temps.

Selon une première variante, une ou plusieurs valves, non représentées, peuvent être placées sur les conduits 27 alimentant les buses 28 ou les orifices d'éjection 29. L'ouverture de chaque valve peut être pilotée pour contrôler le débit d'air passant dans le ou les conduits 27 auxquels elle est branchée. Le débit d'air Fs soufflé par les buses 28 ou les orifices d'éjection 29 correspondants est ainsi réglé de manière individuelle ou groupée suivant leurs positions sur l'envergure du bras de maintien 15.

En référence aux figures 8a, 8b, une deuxième variante est applicable, préférentiellement, au cas où les orifices d'éjections 29 forment des fentes parallèles au bord de fuite 15b, que ce soit de manière continue ou discontinue. Dans cette variante, une fente d'éjection 29 est recouverte par une première grille 31, fixe, et par une deuxième grille 32, mobile en translation le long de la surface du profil du bras de maintien 15. Les deux grilles 31, 32, ont avantageusement une géométrie sensiblement identique, notamment en ce qui concerne la géométrie de leurs orifices et des barreaux les séparant. Ici, la première grille 31 est externe et la deuxième grille 32 glisse sous la première grille. La position de la deuxième grille 32 est contrôlée par un actuateur qui n'est pas représenté sur les figures.

Dans une première position de la deuxième grille 32, en référence à la figure 8a, les orifices des deux grilles 31, 32, se superposent. La fente d'éjection 29 laisse donc passer un maximum de débit de soufflage Fs compatible avec les conditions d'alimentation par le conduit 27.

Dans une deuxième position de la deuxième grille 32, en référence à la figure 8b, les orifices de chaque grille 31, 32 se trouvent face aux barreaux de l'autre grille. Avantageusement cette superposition ferme complètement le passage par la fente d'éjection 29 du flux d'air venant par le conduit d'alimentation 27.

En pilotant la translation de la grille 32 entre la première et la deuxième position, on peut ainsi faire varier, de manière sensiblement continue, le débit d'air soufflé Fs au travers de la fente d'éjection 29 entre une valeur minimale et une valeur maximale.

Dans un mode de réalisation particulier, on peut séparer les grilles 32, 31, ainsi que les fentes 29 éventuellement, en plusieurs parties le long de l'envergure du bord de fuite 15b et contrôler de manière différenciée la translation des grilles mobiles 32. Il est ainsi possible de moduler en temps et en espace le débit soufflé au niveau du bord de fuite 15b.

La modulation du débit d'air soufflé Fs selon l'envergure permet de souffler principalement de l'air du côté radialement externe du bord de fuite 15b, là où l'écoulement est le plus rapide.

La modulation de débit d'air soufflé Fs dans le temps permet de s'adapter aux conditions de vol et, si besoin, de minimiser les pertes moteurs en réduisant le débit d'air soufflé Fs.

### COUPLAGE SOUFFLAGE/REDRESSEUR

De manière avantageuse, les moyens de soufflage précédemment décrits peuvent être installés en combinaison avec les volets mobiles 16 sur les bras de maintien 15.

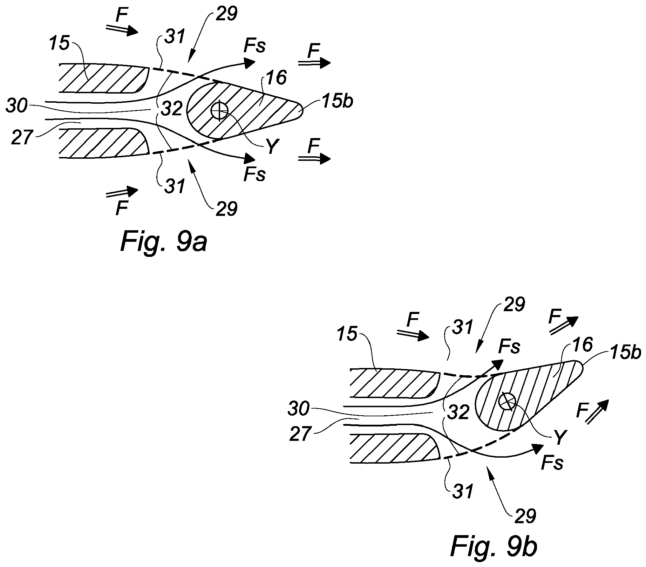

En référence aux figures 9a, 9b, les ouvertures d'éjection 29 sont placées devant le volet mobile 16. Ici, le volet mobile 16 ferme par l'aval la cavité 30 alimentant les orifices d'éjection 29, qui ont la forme de fentes. Le bord de fuite du volet mobile 16 est également le bord de fuite 15b du bras de maintien 15.

Sur l'exemple présenté, les systèmes de fentes 31, 32 qui se décalent pour moduler le débit d'air soufflé Fs par la fente 29 sont installés conformément à la description faite en liaison avec les figures 8a, 8b.

En référence à la figure 9a, lorsque le volet mobile 16 est aligné dans l'axe général du profil du bras de maintien 15, le dispositif de soufflage d'air additionnel Fs fonctionne de manière similaire à ce qui est décrit à propos de la figure 8a, pour limiter le sillage du bras de maintien 15 dans son prolongement.

En référence à la figure 9b, lorsque le volet mobile16 est tourné suivant un angle de calage donné, il dévie l'écoulement général F et donc son sillage d'un angle sensiblement égal à son angle de calage. L'air soufflé Fs par les fentes 29 de part et d'autre du bras de maintien 15, en amont du volet mobile 16, sort toujours avec la même incidence de ces fentes 29. Cependant, les effets de pression sur l'intrados du volet mobile 16 et de succion sur l'extrados entraînent le débit d'air soufflé Fs dans l'écoulement principal F, suivant l'orientation du calage du volet mobile 16. Le soufflage effectué par les fentes 29 assure donc toujours sa fonction de limiter le déficit de vitesse dans le sillage du bras de maintien 15.

Par ailleurs, lorsque des aubes radiales 17 à calage variable sont disposées circonférentiellement entre les bras de maintien 15, comme indiqué à propos de la figure 4, elles peuvent également être équipées de moyens de soufflage. Dans ce cas, il peut être avantageux d'y installer des dispositifs tels que ceux décrits pour les bras de maintien 15 sans volet mobile 16, relation avec les configurations des figures 7b ou 8a et 8b. Des conduits 27 d'alimentation en air soufflé peuvent passer au niveau de l'axe Y' de calage. Il est à noter dans ce cas, que la faible corde des aubes radiale 17 à calage variable diminue leur effet de sillage par rapport aux bras de maintien 15 et rend ainsi le dimensionnement des dispositifs de soufflage moins contraignant.

## Revendications

1. Aéronef comprenant un fuselage (1) et un ensemble propulseur, ledit ensemble propulseur comprenant une turbine de puissance (3), au moins deux générateurs de gaz (2a, 2b) distincts agencés chacun dans une veine d'écoulement primaire (3a, 3b), au moins un rotor de soufflante (7, 8) placé à l'arrière du fuselage (1), dans le prolongement de celui-ci suivant un axe (XX) longitudinal, le rotor de soufflante (6, 7) étant entrainé par la turbine de puissance (3) et une nacelle (14) formant un carénage dudit au moins un rotor de soufflante (7, 8) dans lequel passe un flux d'air (F), chaque veine d'écoulement primaire (3a, 3b) convergeant vers une veine centrale (4) qui alimente la turbine de puissance (3), **caractérisé en ce que** l'aéronef comporte une pluralité de bras radiaux (15, 17) de stator montés en amont dudit au moins un rotor de soufflante (7, 8) et s'étendant entre le fuselage (1) et la nacelle (14), lesdits bras radiaux (15, 17) comportant des moyens de soufflage configurés pour souffler, dans l'environnement d'un bord de fuite (15b, 17b) desdits bras radiaux (15, 17), un flux d'air additionnel (Fs) s'additionnant audit flux d'air (F) dans le prolongement du bord de fuite (15b, 17b).

2. Aéronef selon la revendication 1, dans lequel les moyens de soufflage sont agencés pour répartir le débit du flux d'air additionnel (Fs) de manière différenciée le long de l'envergure d'un bras radial (15), de préférence en assurant un débit plus élevé dans une partie proche de l'extrémité radiale extérieure que dans une partie proche de l'extrémité radiale intérieure.

3. Aéronef selon l'une des revendications précédentes, dans lequel les moyens de soufflage sont agencés pour faire varier le débit de flux d'air additionnel (Fs) dans le temps, en fonction des conditions de fonctionnement de l'ensemble propulseur.

4. Aéronef selon l'une des revendications précédentes, dans lequel, chaque bras radial (15, 17) comportant deux faces latérales s'étendant radialement de part et d'autre d'un profil moyen, les moyens de soufflage comportent des orifices (29) agencés sur lesdites faces latérales pour souffler le flux d'air additionnel (Fs) en amont du bord de fuite (15b, 17b).

5. Aéronef selon la revendication précédente, dans lequel deux grilles (31, 32) placées en sortie desdits orifices (29), l'une coulissant par rapport à l'autre, forment des moyens de réglage du flux d'air additionnel (Fs).

6. Aéronef selon l'une des revendications 4 ou 5, dans lequel chacun desdits orifices (29) a une extension le long de l'axe (XX) longitudinal comprise entre 5% et 10% de la longueur de corde du bras radial (15) au niveau de la distance radiale à laquelle se situe ledit orifice (29).

7. Aéronef selon l'une des revendications précédentes, dans lequel la pluralité de bras radiaux comporte au moins plusieurs bras de maintien (15), configurés pour maintenir la nacelle (14).

8. Aéronef selon l'une des revendications précédentes, dans lequel la distance séparant le bord de fuite (15b) desdits bras radiaux (15) et le rotor de soufflante (7) se trouvant immédiatement en aval suivant ledit écoulement (F), prise à une distance radiale correspondant sensiblement à 70% de l'envergure (E) d'une aube dudit rotor de soufflante (7), est au moins sensiblement égale à trois vingtièmes du diamètre extérieur (D) dudit rotor de soufflante (7).

9. Aéronef selon la revendication précédente, dans lequel la pluralité de bras radiaux comporte au moins plusieurs bras (15) comprenant une partie mobile (16) à calage variable configurée pour dévier axialement ledit flux d'air (F).

10. Aéronef selon la revendication précédente en combinaison avec la revendication 4, dans lequel les orifices (29) de soufflage sont situés en amont desdites parties mobiles (16).

## Patentansprüche

1. Flugzeug, umfassend einen Rumpf (1) und einen Antriebsaufbau, wobei der Antriebsaufbau eine Leistungsturbine (3), mindestens zwei separate Gasgeneratoren (2a, 2b), die jeweils in einem primären Strömungskanal (3a, 3b) angeordnet sind, mindestens einen Gebläserotor (7, 8), der hinten am Rumpf (1) in der Verlängerung von diesem entlang einer Längsachse (XX) platziert ist, wobei der Gebläserotor (6, 7) von der Leistungsturbine (3) angetrieben wird, und eine Gondel (14), die eine Verkleidung des mindestens einen Gebläserotors (7, 8) bildet, in der ein Luftstrom (F) hindurchgeht, wobei jeder primäre Strömungskanal (3a, 3b) zu einem zentralen Kanal (4) zusammenläuft, der die Leistungsturbine (3) versorgt, **dadurch gekennzeichnet, dass** das Flugzeug eine Vielzahl von radialen Statorarmen (15, 17) einschließt, die stromaufwärts des mindestens einen Gebläserotors (7, 8) montiert sind und sich zwischen dem Rumpf (1) und der Gondel (14) erstrecken, wobei die radialen Arme (15, 17) Gebläsemittel einschließen, die dafür ausgelegt sind, in der Umgebung einer Austrittskante (15b, 17b) der radialen Arme (15, 17) einen zusätzlichen Luftstrom (Fs) zu blasen, der zu dem Luftstrom (F) in der Verlängerung der Austrittskante (15b, 17b) hinzukommt.

2. Flugzeug nach Anspruch 1, wobei die Gebläsemittel so angeordnet sind, dass sie den zusätzlichen Luftstromausstoß (Fs) entlang der Spannweite eines radialen Arms (15) auf unterschiedliche Weise verteilen, wobei sie dabei vorzugsweise in einem Teil, der dem radialen äußeren Ende nahe ist, für einen stärkeren Ausstoß sorgen als in einem Teil, der dem radialen inneren Ende nahe ist.

3. Flugzeug nach einem der vorstehenden Ansprüche, wobei die Gebläsemittel so angeordnet sind, dass sie den zusätzlichen Luftstromausstoß (Fs) im zeitlichen Verlauf in Abhängigkeit von Funktionsbedingungen des Antriebsaufbaus variieren.

4. Flugzeug nach einem der vorstehenden Ansprüche, wobei jeder radiale Arm (15, 17) zwei seitliche Flächen einschließt, die sich radial zu beiden Seiten eines mittleren Profils erstrecken, wobei die Gebläsemittel Öffnungen (29) einschließen, die auf den seitlichen Flächen angeordnet sind, um den zusätzlichen Luftstrom (Fs) stromaufwärts der Austrittskante (15b, 17b) zu blasen.

5. Flugzeug nach dem vorstehenden Anspruch, wobei zwei Gitter (31, 32), die am Ausgang der Öffnungen (29) platziert sind, wobei das eine relativ zum anderen gleitet, Regelungsmittel für den zusätzlichen Luftstrom (Fs) bilden.

6. Flugzeug nach einem der Ansprüche 4 oder 5, wobei jede der Öffnungen (29) eine Ausdehnung entlang der Längsachse (XX) von zwischen 5 % und 10 % der Länge der Flügeltiefe des radialen Arms (15) auf Höhe des radialen Abstands, wo sich die Öffnung (29) befindet, aufweist.

7. Flugzeug nach einem der vorstehenden Ansprüche, wobei die Vielzahl von radialen Armen mindestens mehrere Haltearme (15) einschließt, die dafür ausgelegt sind, die Gondel (14) zu halten.

8. Flugzeug nach einem der vorstehenden Ansprüche, wobei der Abstand, der die Austrittskante (15b) der radialen Arme (15) und den Gebläserotor (7), der sich unmittelbar stromabwärts der Strömung (F) folgend befindet, trennt, und zwar in einem radialen Abstand, der im Wesentlichen 70 % der Spannweite (E) einer Schaufel des Gebläserotors (7) entspricht, mindestens im Wesentlichen gleich drei Zwanzigstel des Außendurchmessers (D) des Gebläserotors (7) beträgt.

9. Flugzeug nach dem vorstehenden Anspruch, wobei die Vielzahl von radialen Armen mindestens mehrere Arme (15) einschließt, die einen beweglichen Teil (16) mit variabler Feststellposition umfassen, der dafür ausgelegt ist, den Luftstrom (F) axial abzulenken.

10. Flugzeug nach dem vorstehenden Anspruch in Kombination mit Anspruch 4, wobei sich die Gebläseöffnungen (29) stromaufwärts der beweglichen Teile (16) befinden.

## Claims

1. Aircraft comprising a fuselage (1) and a propulsion assembly, said propulsion assembly comprising a power turbine (3), at least two distinct gas generators (2a, 2b) each arranged in a primary flow duct (3a, 3b), at least one fan rotor (7, 8) placed at the rear of the fuselage (1), in the extension of the fuselage, along a longitudinal axis (XX), the fan rotor (6, 7) being driven by the power turbine (3), and a nacelle (14) forming a fairing for said at least one fan rotor (7, 8) through which an air flow (F) passes, each primary flow duct (3a, 3b) converging towards a central duct (4) that supplies the turbine engine (3), **characterised in that** the aircraft comprises a plurality of radial stator arms (15, 17) mounted upstream of said at least one fan rotor (7, 8) and extending between the fuselage (1) and the nacelle (14), said radial arms (15, 17) comprising blowing means configured to blow, in the vicinity of a trailing edge (15b, 17b) of said radial arms (15, 17), an additional air flow (Fs) adding to said air flow (F) in the extension of the trailing edge (15b, 17b).

2. Aircraft according to claim 1, wherein the blowing means are arranged to differentially distribute the flow of the additional air flow (Fs) along the span of a radial arm (15), preferably by providing a greater flow in a part that is close to the external radial end than in a part that is close to the internal radial end.

3. Aircraft according to either of the preceding claims, wherein the blowing means are arranged to vary the flow of the additional air flow (Fs) over time according to the operating conditions of the propulsion assembly.

4. Aircraft according to any of the preceding claims, wherein, with each radial arm (15, 17) comprising two lateral faces extending radially either side of a mean profile, the blowing means comprise orifices (29) arranged on said lateral faces to blow the additional air flow (Fs) upstream of the trailing edge (15b, 17b).

5. Aircraft according to the preceding claim, wherein two grids (31, 32) placed at the output of said orifices (29), one sliding relative to the other, form adjusting means for adjusting the additional air flow (Fs).

6. Aircraft according to either claim 4 or claim 5, wherein each of said orifices (29) has an extension along the longitudinal axis (XX) that is between 5% and 10% of the chord length of the radial arm (15) in relation to the radial distance at which said orifice (29) is located.

7. Aircraft according to any of the preceding claims, wherein the plurality of radial arms comprises at least a plurality of retention arms (15) configured to retain the nacelle (14).

8. Aircraft according to any of the preceding claims, wherein the distance separating the trailing edge (15b) of said radial arms (15) and the fan rotor (7) located immediately downstream along said flow (F), measured at a radial distance substantially corresponding to 70 % of the span (E) of a vane of said fan rotor (7), is at least substantially equal to three twentieths of the external diameter (D) of said fan rotor (7).

9. Aircraft according to the preceding claim, wherein the plurality of radial arms comprises at least a plurality of arms (15) comprising a variable-pitch movable part (16) configured to axially deflect said air flow (F).

10. Aircraft according to the preceding claim in combination with claim 4, wherein the blow orifices (29) are located upstream of said movable parts (16).
